# EUROPÄISCHE PATENTSCHRIFT

(11) **EP 3 549 247 B1**
(45) Veröffentlichungstag und Bekanntmachung des Hinweises auf die Patenterteilung: **26.05.2021**
(21) Anmeldenummer: 17842412.3
(22) Anmeldetag: 29.11.2017
(51) Int. Cl.: H02K 41/03, H02K 7/14, B23Q 5/10, B23Q 1/25

(54) **BEARBEITUNGSZENTRUM ZUR BEARBEITUNG VON SCHIENENFAHRZEUGRÄDERN UND VERFAHREN ZUR HERSTELLUNG EINES SEGMENTMOTORS FÜR EIN DERARTIGES BEARBEITUNGSZENTRUM**
BEARBEITUNGSZENTRUM ZUR BEARBEITUNG VON SCHIENENFAHRZEUGRÄDERN UND VERFAHREN ZUR HERSTELLUNG EINES SEGMENTMOTORS FÜR EIN DERARTIGES BEARBEITUNGSZENTRUM
CENTRE D'USINAGE POUR L'USINAGE DE ROUES DE VÉHICULES FERROVIAIRES ET PROCÉDÉ DE FABRICATION D'UN MOTEUR À SEGMENTS POUR UN CENTRE D'USINAGE DE CE TYPE

(30) Priorität: 05.12.2016 DE 102016014590
(43) Veröffentlichungstag der Anmeldung: 09.10.2019
(73) Patentinhaber: NILES-SIMMONS Industrieanlagen GmbH, 09117 Chemnitz (DE)
(72) Erfinder: NAUMANN, Hans J., 09117 Chemnitz (DE); PAUSE, Bernhard, 74821 Mosbach (DE); ROBOTTA, Reinhard, 09306 Erlau (DE); RÖMER, Torsten, 08060 Zwickau (DE)
(74) Vertreter: Findeisen, Andreas
(86) Internationale Anmeldenummer: PCT/DE2017/000410
(87) Internationale Veröffentlichungsnummer: WO 2018/103772

(56) Entgegenhaltungen:
- DE-A1-102007 002 782
- DE-A1-102008 006 346
- DE-U1- 20 301 532
- US-A- 5 208 501

## Beschreibung

Die Erfindung betrifft ein Bearbeitungszentrum zur Bearbeitung von Schienenfahrzeugrädern, wobei das Bearbeitungszentrum ein Maschinengestell aufweist, das aus einem Untersatz und aus einem auf diesem Untersatz montierten Ständer besteht, wobei der Untersatz den Hauptantrieb aufnimmt und wobei der Ständer die Bearbeitungseinheiten zum Drehen, Fräsen, Bohren und dergleichen aufnimmt.

Werkzeugmaschinen sind in zahlreichen Ausgestaltungen bekannt. Neben konventionellen Einzweckmaschinen werden zunehmend Bearbeitungszentren realisiert, um das jeweilige Werkstück in möglichst einer Einspannung mit verschiedenen Verfahren (Bohren, Drehen, Fräsen) bearbeiten zu können. Für groß dimensionierte und gleichzeitig sehr schwere Bauteile werden dabei die notwendigen Drehbearbeitungen vorzugsweise mit Komponenten in Form einer Vertikal-Drehmaschine ausgeführt.

Dabei wird das Werkstück auf einem Arbeitstisch lagefixiert und durch Verdrehung dieses Arbeitstisches in eine Position gebracht, in der das Werkzeug in Eingriff kommt. Für derartige Lageänderungen des Arbeitstisches wurden zunächst elektromotorisch betätigte Zahnradgetriebe eingesetzt. Nachteilig ist dabei, dass aufgrund der großen zu bewegenden Massen von Arbeitstisch und Werkstück in Beschleunigungs- und Bremsphasen hohe mechanische Belastungen der Baugruppen zur Lageänderung des Arbeitstisches auftreten. Diese bewirken einen erhöhten Verschleiß und somit eine verminderte Nutzungsdauer der Baugruppen zur Lageänderung, so dass sich zwangsläufig ein erhöhter Aufwand zur Wartung des Bearbeitungszentrums ergibt. Die zu erreichenden Positioniergenauigkeiten und eventuell interpolatorisch erzeugte Bahngenauigkeiten sind bei dieser konstruktiven Ausführung nicht ausreichend.

Zur Verminderung solcher Nachteile wurde in DE 10 2008 006 346 A1 vorgeschlagen, den Werkstücktisch eines Bearbeitungszentrums mit einem Torquemotor auszustatten. Dabei wird das für eine Bohr-, Fräs- und Drehbearbeitung vorgesehene Werkstück auf einem Drehtisch geklemmt.

Aus US 5 208 501 A ist ein lineares Schrittmotorsystem bekannt, wobei ein Schrittmotor definierte Winkellagen ohne ein externes Messsystem anfahren kann. Ein derartiger Schrittmotor kann allerdings nicht für dauerhaft hohe Drehzahlen während der Bearbeitung eingesetzt werden.

DE 10 2007 002 782 A1 betrifft einen Drehantrieb mit geraden Primärteilsegmenten, der vorzugsweise als ein Antrieb für eine Presse ausgestaltet ist.

In DE 203 01 532 U1 wird ein elektromotorischer Rotationsantrieb beschrieben, der einen sich über einen Umfangsabschnitt erstreckenden Stator und einen mit Permanentmagneten bestückten Rotor umfasst.

Ein weiterer Lösungsvorschlag ist aus DE 20 2009 008 850 U1 bekannt, indem bei einer Vertikal-Drehmaschine zur Bearbeitung von großen Bauteilen ein Wanderfeldmotor zum Antrieb des Arbeitstisches genutzt wird. Dabei sind die Sekundär-Segmente in einem Trägerring des Arbeitstisches ringförmig angeordnet und fest positioniert. Unmittelbar gegenüber liegen Primär-Segmente, die ebenfalls ringförmig angeordnet sind.

Eine derartige Ausgestaltung als indirekter (Arbeitstisch) oder direkter (Werkstück) Antrieb für eine rotatorische Lageänderung des Werkstückes als Axialsegmentmotor ergibt wesentliche Vorteile gegenüber den vorab eingesetzten Konstruktionen, von denen insbesondere ein reduzierter Verschleiß der Antriebsbaugruppen und sehr schnelle Beschleunigungs- und Bremszeiten zu nennen sind.

Allerdings hat sich in der Praxis gezeigt, dass Segmentmotoren eine sehr spezifische Anpassung für die jeweils konkret zu bearbeitenden Bauteile erfordern. Der Axialspalt zwischen Primär- und Sekundärelementen muss unabhängig von der Arbeitstisch- und Werkstückmasse konstant gehalten werden. Spezielle Axiallagerungen oder hydrostatische Lösungen sind notwendig und erhöhen die konstruktiven Aufwendungen. Deshalb ist die Nutzung bisher weitgehend auf ausgewählte Erzeugnisse begrenzt, z.B. auf Rotoren für Windräder. Für andere groß dimensionierte und schwere Bauteile (beispielsweise Räder für Schienenfahrzeuge) sind geeignete Modifizierungen eines Segmentmotors bisher nicht verfügbar.

Weiterhin ist festzustellen, dass die Montage von Segmentmotoren beim Hersteller oftmals Schwierigkeiten bereitet. Denn infolge der großen Magnetkräfte ist eine korrekte Positionierung der noch nicht endgültig lagefixierten Einzelsegmente problematisch.

Aufgabe der Erfindung ist es, einen Segmentmotor zu schaffen, der als Antrieb für rotatorische Lageänderungen eines auf einem Bearbeitungszentrum zu bearbeitenden Rades für ein Schienenfahrzeug geeignet ist.

Diese Aufgabe wird gelöst, indem der Antrieb eines Spannfutters für das Schienenfahrzeugrad als Werkstück direkt durch einen unterhalb vom Werkstück angeordneten Segmentmotor erfolgt, der radial segmentiert und in seiner Bauhöhe modifizierbar ist. Dieser Segmentmotor weist einen Stator mit radialen Antriebssegmenten als Statorsegmente und einen Rotor auf, der als eine Rotorglocke mit als Permanentmagneten ausgebildeten Rotorsegmenten ausgestaltet ist. Dabei sind zwei bis fünf separate Statorsegmente mit einer jeweils gleichen Höhe von 200 bis 350 mm vorgesehen. In der Rotorglocke sind innen auf zwei Reihen gleichmäßig verteilt Wuchtbleche und am Außenumfang der Rotorglocke sind Nutensteine angeordnet. Mittels der ersten Nutensteine sind die Rotorsegmente an der Rotorglocke befestigt und mittels der zweiten Nutensteine sind die Statorsegmente jeweils einzeln im Untersatz befestigt.

Durch die erfindungsgemäße technische Lösung wird ein Segmentmotor geschaffen, der als Antrieb für rotatorische Lageänderungen eines auf einem Bearbeitungszentrum zu bearbeitenden Rades für ein Schienenfahrzeug geeignet ist. Die konstruktive Ausführung gestattet das hochgenaue Koordinatenbohren in speziell weiterentwickelte Räder für Schienenfahrzeuge, wie sie in Hochgeschwindigkeitszügen zum Einsatz kommen.

Nachfolgend wird ein Ausführungsbeispiel der Erfindung unter Bezugnahme auf die Zeichnung und beispielhaft an einer Radsatzbearbeitungsmaschine erläutert. Es zeigen:
- Fig. 1: den Grundaufbau eines erfindungsgemäßen Segmentmotors in Draufsicht
- Fig. 2: die Anordnung wesentlicher Bauteile in Seitenansicht

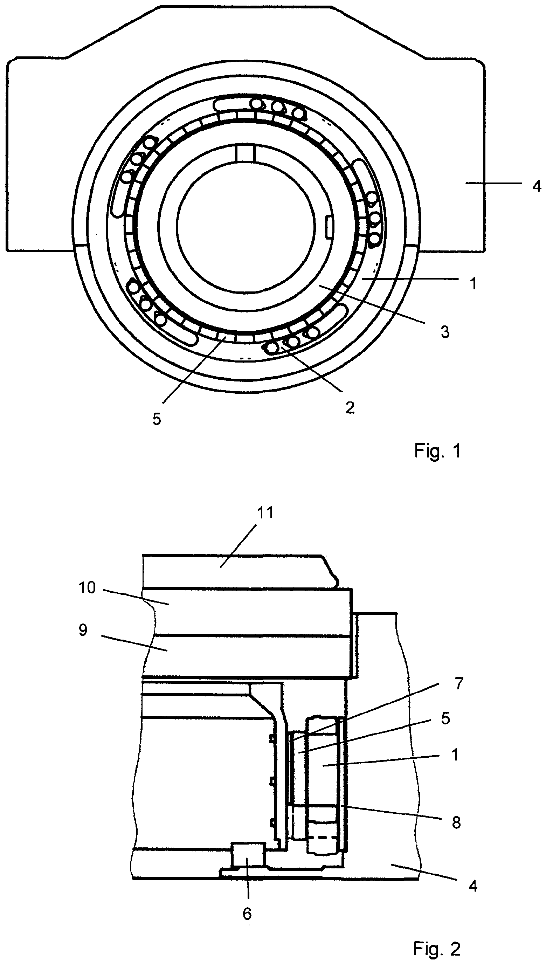

Aus **Fig. 1** ist der grundsätzliche Aufbau eines Segmentmotors als Antriebsbaugruppe für ein auf einem Bearbeitungszentrum rotatorisch zu bewegendes Rad für ein Schienenfahrzeug ersichtlich.

Das Maschinengestell des Bearbeitungszentrums besteht aus einem Untersatz 4 und aus einem darauf montierten Ständer zur Aufnahme der Bearbeitungseinheiten zum Drehen, Fräsen, Bohren und dergleichen. Der Untersatz 4 als Maschinenbasis nimmt den Hauptantrieb auf. Der Hauptantrieb besteht aus einem Segmentmotor, der am Untersatz 4 befestigt wird.

Der Antrieb eines Spannfutters 10 für das Schienenfahrzeugrad 11 als zu bearbeitendes Werkstück erfolgt direkt durch den darunterliegenden Segmentmotor, dessen Statorsegmente 2 durch Nutensteine 8 mit dem Untersatz 4 verbunden sind.

Die Permanentmagneten 5 sind mit Hilfe von Nutensteinen 7 (Fixiereinlagen) an die Rotorglocke 3 angebunden. Die Rotorglocke 3 wird für die Montage durch Zentrierelemente 6 justiert. Der Stator 1 weist maximal fünf radiale Segmente 2 auf, wobei die konkrete Anzahl unter Beachtung der jeweils konkreten Einsatzerfordernisse ausgewählt wird. Ebenso wird die Höhe dieser separaten Statorsegmente 2 den konkreten Einsatzerfordernissen angepasst, wobei Höhen von 200 bis 350 mm praxisrelevant sind.

Aus **Fig. 2** ist aus einem anderen Blickwinkel die Anordnung und funktionelle Wirkverbindung von Rotorglocke 3, Zentrierelementen 6 und den Nutensteinen 8 (Passfedern mit Umgriff) zur Befestigung der Statorsegmente 2 ersichtlich. Auf der Rotorglocke 3 sitzt der innere Lagerring 9. Das Spannfutter 10 zur Aufnahme eines Rades 11 ist auf diesem inneren Lagerring 9 montiert.

Für die Montage, die nicht Teil der Erfindung ist und nachfolgend lediglich zum besseren Verständnis eines derart aufgebauten Segmentmotors beschrieben wird, wird zunächst der Untersatz ausgerichtet. Danach werden in der Rotorglocke innen auf zwei Reihen gleichmäßig Wuchtbleche verteilt und befestigt. Danach werden Nutensteine am Außenumfang der Rotorglocke befestigt und handfest angezogen. Danach werden die Rotorsegmente einzeln montiert und mittels der Nutensteine an der Rotorglocke befestigt. Danach werden die handfest angezogenen Nutensteine drehmomentfest angezogen. Danach werden die Rotorsegmente mit einer Schutzfolie umschlossen. Danach erfolgt eine Justierung der Rotorsegmente mit mindestens einem Hilfsmittel aus einem nichtmagnetischen Werkstoff. Danach wird die derart komplettierte Einheit im Untersatz montiert und zur Lagesicherung temporär verschraubt. Danach erfolgt die Demontage der Hilfsmittel aus nichtmagnetischem Werkstoff. Danach werden die Statorsegmente jeweils einzeln mittels Nutensteinen im Untersatz montiert und befestigt. Danach werden jeweils die elektrischen Anschlüsse für die Statorelemente und die Medienleitungen für eine Statorkühlung installiert.

### Bezugszeichenliste

- 1: Stator
- 2: Statorsegment
- 3: Rotorglocke
- 4: Untersatz (Maschinenbasis)
- 5: Permanentmagnet
- 6: Zentrierelement für Rotor
- 7: Nutenstein für Rotor
- 8: Nutenstein für Stator
- 9: innerer Lagerring
- 10: Werkstückaufnahme (Spannfutter)
- 11: Schienenfahrzeugrad (Werkstück)

## Patentansprüche

1. Bearbeitungszentrum zur Bearbeitung von Schienenfahrzeugrädern, wobei das Bearbeitungszentrum ein Maschinengestell aufweist, das aus einem Untersatz und aus einem auf diesem Untersatz montierten Ständer besteht, wobei der Untersatz den Hauptantrieb aufnimmt und wobei der Ständer die Bearbeitungseinheiten zum Drehen, Fräsen, Bohren und dergleichen aufnimmt, **dadurch gekennzeichnet,**
**dass** der Antrieb eines Spannfutters (10) für das Schienenfahrzeugrad als Werkstück (11) direkt durch einen unterhalb vom Werkstück (11) angeordneten Segmentmotor erfolgt, der radial segmentiert und in seiner Bauhöhe modifizierbar ist, wobei dieser Segmentmotor einen Stator (1) mit radialen Antriebssegmenten als Statorsegmente (2) und einen Rotor aufweist, der als eine Rotorglocke (3) mit als Permanentmagneten ausgebildeten Rotorsegmenten (5) ausgestaltet ist, wobei zwei bis fünf separate Statorsegmente (2) mit einer jeweils gleichen Höhe von 200 bis 350 mm vorgesehen sind, wobei in der Rotorglocke (3) innen auf zwei Reihen gleichmäßig verteilt Wuchtbleche und am Außenumfang der Rotorglocke (3) Nutensteine (7, 8) angeordnet sind, wobei mittels der ersten Nutensteine (7) die Rotorsegmente (5) an der Rotorglocke (3) befestigt sind und wobei mittels der zweiten Nutensteine (8) die Statorsegmente (2) jeweils einzeln im Untersatz (4) befestigt sind.

## Claims

1. A machining center for machining rail vehicle wheels, wherein the machining center comprises a machine frame consisting of a base and a stand mounted on the base, wherein the base accommodates the main drive and wherein the stand accommodates the machining units for turning, milling, drilling and the like, **characterized in that**
a chuck (10) for the rail vehicle wheel as the workpiece (11) is directly driven by a segment motor disposed underneath the workpiece (11), which motor is radially segmented and modifiable in its overall height, wherein said segment motor comprises a stator (1) having radial drive segments as stator segments (2) and a rotor which is designed as a rotor bell (3) having rotor segments (5) configured as permanent magnets, wherein two to five separate stator segments (2) with a respectively identical height of 200 to 350 mm are provided, wherein balancing plates are evenly distributed in two rows on the inside of the rotor bell (3) and sliding blocks (7, 8) are disposed on the outer periphery of the rotor bell (3), wherein the rotor segments (5) are attached to the rotor bell (3) by means of the first sliding blocks (7), and wherein the stator segments (2) are each individually attached in the base (4) by means of the second sliding blocks (8).

## Revendications

1. Centre d'usinage pour l'usinage de roues de véhicules ferroviaires, le centre d'usinage comprenant un bâti de machine constitué d'une base et d'un support monté sur cette base, la base recevant l'entraînement principal et le support recevant les unités d'usinage pour le tournage, le fraisage, l'alésage et similaires, **caractérisé,**
**en ce que** l'entraînement d'un mandrin (10) pour la roue de véhicule ferroviaire en tant que pièce (11) s'effectue directement par un moteur à segments disposé en-dessous de la pièce (11), segmenté radialement et modifiable en sa hauteur, ce moteur à segments présentant un stator (1) avec des segments d'entraînement radiaux en tant que segments de stator (2) et un rotor conçu comme une cloche de rotor (3) avec des segments de rotor (5) conçus comme des aimants permanents dans lesquels il est prévu deux à cinq segments de stator (2) séparés, ayant chacun la même hauteur de 200 à 350 mm; des plaques d'équilibrage sont disposées à l'intérieur de la cloche de rotor (3), réparties uniformément sur deux rangées et des coulisseaux (7, 8) sont disposés sur la périphérie extérieure de la cloche du rotor (3), les segments de rotor (5) étant fixés à la cloche de rotor (3) au moyen des premiers coulisseaux (7) et les segments de stator (2) étant fixés individuellement dans le support (4) au moyen des seconds blocs coulissants (8).
